# EUROPEAN PATENT APPLICATION

(11) **EP 2 942 275 A1**
(43) Date of publication of application: **11.11.2015**
(21) Application number: 14305665.3
(22) Date of filing: 06.05.2014
(51) Int. Cl.: B64C 39/02, A63H 17/12

(54) **Damping means for a flying drone apparatus**

(71) Applicant: Puy du Fou International, 85590 Les Epesses (FR); ACT Lighting Design, 2520 Ranst (BE)
(72) Inventor: Buys, Koen, B-1981 HOFSTADE (BE); Meeus, Kobe, 3053 HAASRODE (BE)
(74) Representative: Novagraaf Technologies

(57) **Abstract**

The invention is about a flying drone (1) adapted for supporting one or more payload elements, said flying drone (1) comprising a main body (2) forming a housing for central unit (3), and directional means (4), said central unit (3) comprising command means,
said main body (2) comprises one base (20) prolonged by a wall (21),
characterized in that the flying drone (1) further comprises damping means adapted to damp stress exercised on said command means, said damping means comprising first damping means (5) disposed between the main body (2) and the command means.

## Description

### Field of the Invention

The present invention relates to flying drones, and notably to Vertical Take-Off Landing (VTOL) flying drones. The present invention relates more particularly but not exclusively to flying drones adapted for supporting one or more payload elements.

### Background

There is currently a tremendous development of technologies in the field of flying drones, also called Unmanned Aerial Vehicles (UAV). As it is known, these flying drones comprise a main body forming a housing for central control unit, and several directional means. Each of directional means classicaly comprises at least one motor device combined with one propeller. For example, flying drones can comprise eight directional means regularly disposed around the main body.

Besides, flying drones conventionnally comprise electronic components such as positioning systems, gyroscopes, accelerometer, or PCBs, alimented by autonomous power sources.

Such components which indicate datas concerning the position, the flying height, the speed, ... of the flying drone needs to have just a few, or no disturbance to obtain accurate datas or measurements.

Moreover, such components make a flying drone relatively expensive and fragile in view of potential risks it is exposed to, such as crashs. In fact, when a drone crash on the ground or hurt an obstacle, exposed pieces such as directional means or chip boards with positioning system can be damaged which is not satisfying for consumers because of the maintenance costs. Furthermore, the time required to repair such flying drones when damaged is relatively significant because of the complexity of the pieces which have to be repaired or replaced which is not satisfying.

### Summary

To overcome at least one of the aforementioned drawbacks, an object of this invention is a flying drone adapted for supporting one or more payload elements, said flying drone comprising a main body forming a housing for central unit, and directional means, said central unit comprising command means, said main body comprises one base prolonged by a wall, characterized in that the flying drone further comprises damping means adapted to damp stress exercised on said command means, said damping means comprising first damping means disposed between the main body and the command means.

In another embodiment of the invention, the central unit comprises a PCB supporting said command means, said first damping means being disposed between said PCB and said main body.

The damping means may comprise second damping means including a flexible area being part of said base.

In an embodiment, the base comprise outgrowths regularly arranged on said base so that said PCB is adapted to be fixedly positioned in a rigid area formed between said outgrowths.

Advantageoulsy, said flexible area is disposed between said wall and said rigid area.

Advantageously, said first damping means are adapted to damp a stress comprised between 0,5kN and 1,5kN.

In another embodiment, first damping means are adapted to damp a stress of about 1 kN.

In another embodiment, the first damping means are advantageously made in rubber.

Advantageously, the first damping means are made by three dimensional printing.

In another embodiment, flying drone further comprises adjusting means for adjusting stress damping of first damping means.

The adjusting means may comprise a screw adapted to adjust stress damping of first damping means by tensioning.

In another embodiment of the invention, the first damping means comprise at least one damper presenting one spherical shaped central part disposed between two lips.

### Brief Description of the Figures

Some embodiments of the flying drone in accordance with embodiments of the present invention are now described, by way of example only, and with reference to the accompagnying drawings, in which :
- The Figure 1 schematically illustrates an entire flying drone according to an embodiment of the invention,
- The Figures 2 and 3 schematically illustrate an exploded view of a main body, according to the embodiment of Figure 1,
- The Figure 4 schematically illustrates a cut section view of a main body, according to the embodiment of Figure 1, and
- The Figure 5 schematically illustrates damping means, according to the embodiment of Figure 2.

### Description of Embodiments

Hereafter is notably disclosed a flying drone adapted for supporting one ore more payload elements.

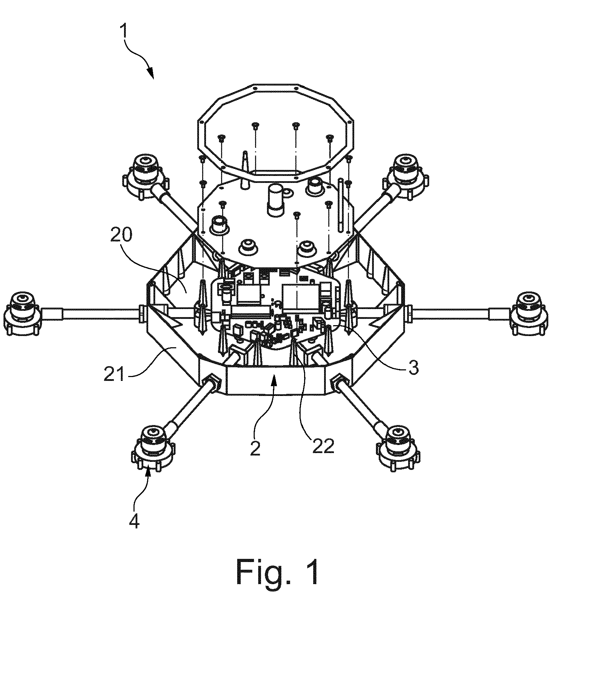

As shown in figure 1, the flying drone comprises a main body 2 forming a housing for a central unit 3, and several directional means 4. In the exemplary embodiment of figure 1, the flying drone 1 comprises six directional means 4, each composed of one motor device combined with one propeller (not shown).

Each directional means 4 is linked with the main body 2 by an arm comprising a first extremity connected to the main body 2 and a second extremity connected to the directional means 4.

The central unit 3 mainly comprises command means 30 supported by a PCB 31. This central unit further comprises measure apparatus and location apparatus such as positioning system, gyroscopes, accelerometers.

As illustrated in the different figures, the main body 2 comprises one base 20 prolonged by a wall 21. In this embodiment, the wall 21 approximately makes a right angle with the base 20. To solidify and rigidify this main body 2 in order to provide a good protection for the central unit 3, the main body 2 further comprises reinforcing means 23 regularly arranged on the inner periphery of the base 20, said reinforcing means being connected with the wall 21 and the base 20.

The main body 2 further comprises outgrowths 22 regularly arranged on the base 20, these outgrowths 22 being placed so that the PCB 31 can be fixedly positioned in the area formed between the outgrowths 22. Moreover, these outgrowths may be adapted to protect the PCB and the command means.

In this example, the flying drone comprise damping means adapted to damp stress exercised on command means.

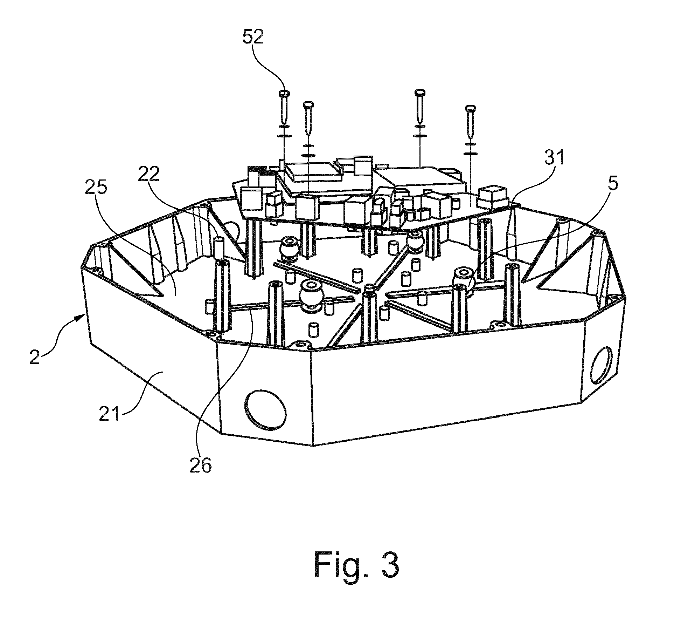

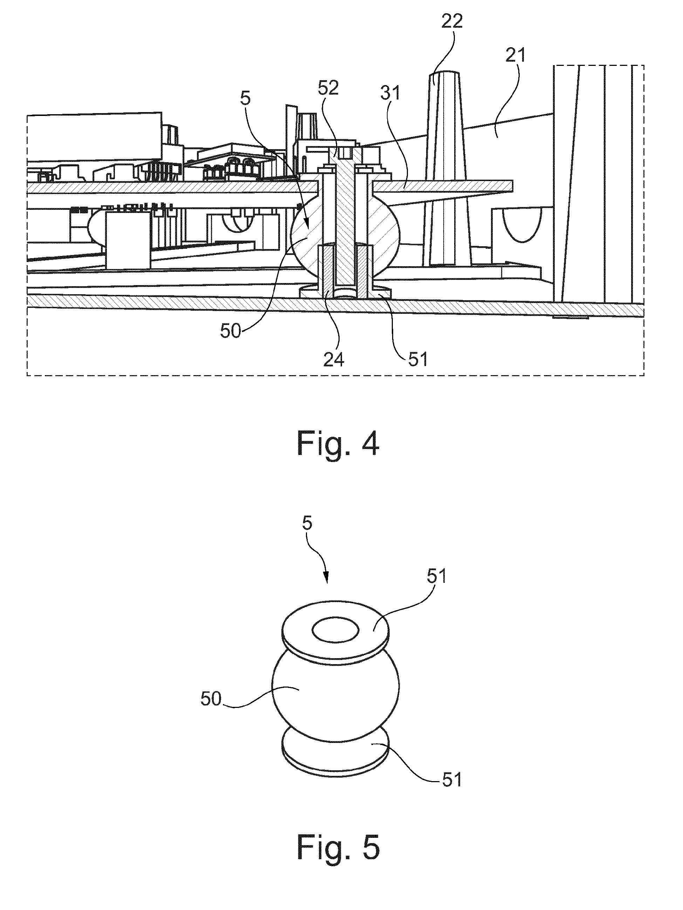

As better illustrated in figure 3 and figure 4, the flying drone 1 further comprises first damping means 5 which are disposed between the main body 2 and the command means 30.

Particularly, in this embodiment, the first damping means 5 comprise four dampers which are disposed between the PCB 31 and the main body 2. This flying drone also comprises four dampers, regularly arranged under the surface of the PCB 31.

In this example, the only first damping means implemented are dampers. Moreover, we could imagine other embodiments in which first damping means may comprise other components.

More particularly in this embodiment, the first damping means 5 are disposed between the PCB 31 and the base 20 of the main body 2.

Thus, the first damping means 5 are adapted to damp stress exercised on command means 30, and more particularly on the PCB 31 on this example.

Depending on the embodiment, the first damping means may be adapted to damp a stress comprised between 0,5kN and 1,5kN, depending among others on the weight of the PCB and the command means.

In this example, the PCB weighs about 400g. Also, each of the dampers 5 is able to damp a stress of about 1 kN, in order to damp the whole 400g with the four dampers 5. The dampers are disposed on the base 20 so that the stress is substantially equally distributed on the four dampers.

In other embodiments, the flying drone may comprise more first damping means. Moreover, we could imagine embodiments with first damping means comprising dampers and other components.

As shown in figure 4 and figure 5, each damper presents one spherical shaped central part 50 disposed between two lips 51. The damper further presents a hole so that it can be fixedly attached to a protuberance 24 provided on the base 20. In this example one lip 51 of the damper 5 is in contact with the base, the protuberance 24 being in contact within the hole of the damper.

The other lip of the damper is provided such that, when the PCB 31 is linked to the damper 5, the PCB 31 is fixedly retained between the other lip 51 and the spherical shaped central part 50. In other words, the PCB 31 is blocked between one lip of the damper 5 and the spherical part of the damper. The lip 51 is also over the PCB 31.

As shown in figure 4, the flying drone 1 further comprises adjusting means 52 adapted to adjust stress damping of first damping means 5, and adapted to maintain in position the first damping means 5.

In this example, the adjusting means 52 comprise four screws, each screw cooperating with one damper in order to adjust stress damping of the damper by tensioning it. Each screw is placed within the hole of the corresponding damper 5 and is screwed inside the protuberance 24 of the base 20. The tensioning of the damper 5 is also set by the screwing or unscrewing of the screw.

In other embodiments, we could imagine different adjusting means to adjust the tension of the first damping means.

In this example, the four dampers comprised in first damping means are made in rubber. We could of course provide embodiments in which damping means are made in other materials.

Furthermore, in this embodiment, the first damping means are made by three dimensional printing.

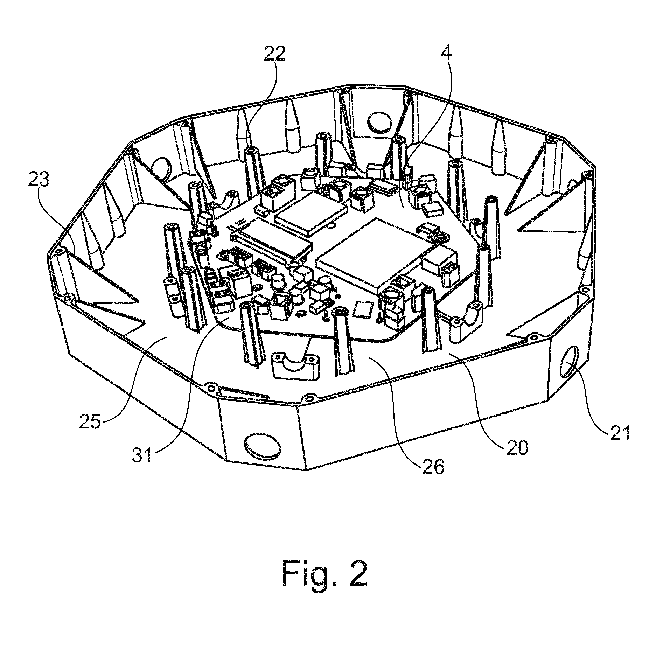

As show in figures 1 and 2, the damping means comprise second damping means including a flexible area 25 which is a part of the base 20. This flexible area 25 is disposed between the wall 21 and a rigid area 26 formed between the outgrowths 22.

In other words, the base 20 comprises outgrowths 22 regularly arranged on said base 20 so that said PCB 31 is adapted to be fixedly positioned in a rigid area 26 formed between said outgrowths 22. And the flexible area is delimited between the wall 21 and the rigid area 26.

In this example, the flexible area 25 is made in polyéthylène.

Such damping means (corresponding in a combination of first damping means and second damping means) implemented in the exposed embodiment reduce or remove undesired vibration applied on measurement and data devices such as gyroscopes, accelerometers, positioning systems, ...

Moreover, such damping means are adapted to protect these expensive components of flying drone in a case of crash or in impacts, for example, which could damage the devices and represent a non negligible cost for the user.

## Claims

1. Flying drone (1) adapted for supporting one or more payload elements, said flying drone (1) comprising a main body (2) forming a housing for central unit (3), and directional means (4), said central unit (3) comprising command means,
said main body (2) comprises one base (20) prolonged by a wall (21), **characterized in that** the flying drone (1) further comprises damping means adapted to damp stress exercised on said command means, said damping means comprising first damping means (5) disposed between the main body (2) and the command means.

2. Flying drone according to claim 1, wherein said central unit (3) comprises a PCB (31) supporting said command means, said first damping means (5) being disposed between said PCB (31) and said main body (2).

3. Flying drone according to claim 2, wherein said damping means further comprise second damping means (25) including a flexible area (25) being part of said base (20).

4. Flying drone according to claim 3, wherein said base (20) comprise outgrowths (22) regularly arranged on said base (20) so that said PCB (31) is adapted to be fixedly positioned in a rigid area (26) formed between said outgrowths (22).

5. Flying drone according to claim 4, wherein said flexible area (25) is disposed between said wall (21) and said rigid area (26).

6. Flying drone, according to any of claims 1 to 5, wherein said first damping means (5) are adapted to damp a stress comprised between 0,5kN and 1,5kN.

7. Flying drone, according to claim 6, wherein said first damping means (5) are adapted to damp a stress of about 1 kN.

8. Flying drone, according to any of preceding claims, wherein said first damping means (5) are made in rubber.

9. Flying drone, according to any of preceding claims, wherein said first damping means (5) are made by three dimensional printing.

10. Flying drone, according to any of preceding claims, wherein said flying drone (1) further comprises adjusting means (52) for adjusting stress damping of first damping means (5).

11. Flying drone, according to preceding claim, said adjusting means (52) comprise a screw adapted to adjust stress damping of first damping means (5) by tensioning.

12. Flying drone, according to any of preceding claims, the first damping means (5) comprising at least one damper presenting one spherical shaped central part (50) disposed between two lips (51).
